# DEMANDE DE BREVET EUROPEEN

(11) **EP 2 927 823 A1**
(43) Date de publication de la demande: **07.10.2015**
(21) Numéro de dépôt: 15161749.5
(22) Date de dépôt: 30.03.2015
(51) Int. Cl.: G06F 17/30

(54) **Procédé et un dispositif de gestion de document multimedia sur un thème donné**

(30) Priorité: 31.03.2014 FR 1452782
(71) Demandeur: Orange, 75015 Paris (FR)
(72) Inventeur: Le Brun, Suzanne, 35200 RENNES (FR); Millet, Valentin, MONTREAL, QC H2G 3A3 (CA); Martinez, Thierry, 22307 LANNION (FR)

(57) **Abrégé**

L'invention concerne un procédé et un dispositif d'interaction avec au moins un document multimédia sur un thème donné par un utilisateur à partir d'un ensemble de contenus, en particulier d'articles de presse.

Un objet de l'invention est un procédé d'interaction avec au moins un document multimédia sur un thème donné par un utilisateur à partir d'au moins un ensemble de contenus, comportant une action sur ledit ensemble de contenus suite à une commande d'un utilisateur, ladite action déclenchant une copie d'au moins une partie d'au moins un desdits contenus, ladite partie dudit au moins un desdits contenus traitant d'un thème donné, ladite copie étant agrégée à un document multimédia sur le thème donné.

Ainsi, le document multimédia regroupe des extraits de contenus tels qu'ils étaient lorsqu'un intérêt par rapport au thème donné y a été détecté. Cela évite de trouver dans ce document multimédia des contenus qui, une fois mis à jour, n'adresse plus le thème donné.

## Description

L'invention concerne un procédé et un dispositif d'interaction avec au moins un document multimédia par un utilisateur à partir d'un ensemble de contenus, un procédé et un dispositif de gestion de document multimédia sur un thème donné par un utilisateur à partir d'un ensemble de contenus, en particulier d'articles de presse.

Aujourd'hui les fournisseurs d'accès à des contenus proposent, lors la connexion à leur service par un utilisateur donné, la possibilité de gérer une ou plusieurs listes de favoris. Ainsi, lorsqu'un utilisateur consulte des contenus, il peut choisir de les mémoriser pour leur intérêt dans une liste de favoris qu'il peut éventuellement hiérarchiser en fonction de leur intérêt pour lui. Cette liste de favoris est constituée par des liens vers les contenus indexés comme favoris.

Ainsi, si les contenus sont mis à jour, l'utilisateur qui consultera à nouveau un contenu à partir de sa liste de favoris ne verra pas systématiquement le contenu tel qu'initialement consulté mais éventuellement le contenu mis à jour avec éventuellement une perte d'information par rapport au contenu initialement consulté. Notamment, l'utilisateur ne sera pas capable de déterminer la partie du contenu mise à jour entre sa première consultation et cette nouvelle consultation.

En outre, les contenus peuvent être supprimés, l'utilisateur, qui voudra consulter à nouveau le contenu, ne pourra alors plus y avoir accès.

Les listes de lecture proposées aujourd'hui sont constituées d'une liste d'adresses qui sont lues les unes à la suite des autres dans l'ordre indiquées par la liste de lecture.

Dans un premier mode de réalisation, la liste d'adresses pointe sur des contenus du propriétaire de la liste de lecture. Si le propriétaire de la liste supprime ou déplace un de ses contenus (notamment pour des questions de gestion d'espace mémoire sur un support), la recherche, lors de l'exécution de la liste, du contenu supprimé entrainera au mieux un saut à l'adresse du contenu suivant dans la liste, et au pire l'arrêt de l'exécution de la liste de lecture. Sachant que les contenus sont gérés par le propriétaire de la liste de lecture, celui-ci peut mettre à jour sa liste lors d'une modification de ses contenus.

Dans un deuxième mode de réalisation, la liste d'adresses pointent sur des contenus d'un fournisseur d'accès à des contenus ou d'un diffuseur de contenus. Si le fournisseur d'accès supprime un contenu de son catalogue ou si le terminal de l'utilisateur ne peut pas se connecter ponctuellement au réseau de communication auquel ledit fournisseur d'accès est connecté, la liste de lecture ne peut pas être exécutée correctement.

Dans tous les cas, ces listes ne permettent pas de retrouver le contenu tel qu'il a intéressé l'utilisateur.

Un des buts de la présente invention est de remédier à des insuffisances de l'état de la technique.

Un objet de l'invention est un procédé d'interaction avec au moins un document multimédia sur un thème donné par un utilisateur à partir d'au moins un ensemble de contenus, comportant une action sur ledit ensemble de contenus suite à une commande d'un utilisateur, ladite action déclenchant une copie d'au moins une partie d'au moins un desdits contenus, ladite partie dudit au moins un desdits contenus traitant d'un thème donné, ladite copie étant agrégée à un document multimédia sur le thème donné.

Ainsi, le document multimédia regroupe des extraits de contenus tels qu'ils étaient lorsqu'un intérêt par rapport au thème donné y a été détecté. Cela évite de trouver dans ce document multimédia des contenus qui, une fois mis à jour, n'adresse plus le thème donné.

Avantageusement, l'action sur l'ensemble de contenus déclenche une agrégation de ladite copie audit document multimédia sur un thème donné.

Ainsi, cela limite les surcharges de transmission liées à la transmission de la copie vers un agrégateur et/ou les surcharges de mémoire en raison de la demande, voire de la gestion, par le même procédé de la copie et de l'agrégation.

Avantageusement, l'action sur l'ensemble de contenus déclenche une recherche, en fonction d'un thème donné par un utilisateur, de parties de contenus parmi au moins un ensemble de contenus, ladite recherche déclenchant la copie des parties de contenus résultantes de ladite recherche.

Ainsi, un utilisateur ayant indiqué un thème d'intérêt pourra obtenir une agrégation des contenus auxquels il a accès sur ce thème sans nécessité une lecture de l'ensemble de ces contenus de sa part et avec une limitation du risque d'omission d'un contenu traitant dudit thème.

Avantageusement, le procédé d'interaction comporte une requête de création d'un document multimédia sur un thème donné suite à une commande de l'utilisateur, la création du document déclenchant ladite recherche en fonction dudit thème donné par ledit utilisateur.

Ainsi, la demande de création d'un document multimédia sur un thème donné par un utilisateur, notamment lors de la sélection d'un partie d'un premier contenu lors de sa lecture par ledit utilisateur déclenchera l'agrégation automatique évitant à l'utilisateur de demander des documents multimédia sur des thèmes soit trop précis (regroupant peu ou pas de contenus), ou inversement trop vague (regroupant un trop grand nombre de contenus).

Avantageusement, le procédé d'interaction comporte une requête d'ajout d'au moins un contenu dans ledit au moins un ensemble de contenus, la requête d'ajout déclenchant ladite recherche, parmi les contenus ajoutés, en fonction des thèmes associés à des documents multimédia.

Ainsi, lorsqu'un fournisseur d'accès à des contenus met à jour les contenus qu'il propose à un utilisateur ou que l'utilisateur achète de nouveaux contenus, ceci sont automatiquement lus par le procédé d'interaction pour être intégré dans les thèmes donnés par ledit utilisateur.

Avantageusement, le procédé d'interaction comporte une action sur une partie d'un contenu suite à une commande de sélection de ladite partie dudit contenu au moyen d'une interface par un premier utilisateur d'une entité sociale, l'action sur une partie déclenchant ladite copie de ladite partie sélectionnée dudit contenu, ladite copie étant agrégée dans un document multimédia sur un thème donné par un deuxième utilisateur d'une entité sociale.

Ainsi, l'utilisateur peut lui-même au cours d'une lecture d'un contenu choisir de collectionner tout ou partie de ce contenu dans un ou plusieurs thèmes existants ou nouveaux.

Avantageusement, l'action sur l'ensemble de contenus déclenche une analyse de ladite partie sélectionnée dudit contenu en fonction des thèmes de documents multimédia associés audit utilisateur, ladite copie de ladite partie sélectionnée étant agrégée aux documents multimédia sur les thèmes analysés dans ladite partie sélectionnée.

Ainsi, la partie du contenu ayant intéressée l'utilisateur au cours de sa lecture du contenu est automatiquement agrégé au document multimédia d'un thème adéquat.

Avantageusement, le procédé d'interaction comporte un déclenchement d'une recherche par une indication au moyen de ladite interface par ledit premier utilisateur d'au moins un thème associé à ladite partie sélectionnée, la copie de ladite partie sélectionnée étant agrégé à un document multimédia associé audit premier utilisateur sur le thème indiqué par ledit premier utilisateur.

Ainsi, l'utilisateur peut indiquer un thème soit en le sélectionnant dans une liste de thèmes fournie par l'analyse de la partie sélectionnée ou dans la liste des thèmes des documents multimédia associé à l'utilisateur (directement ou via une entité sociale), soit en le saisissant au moyen d'une interface de saisie ou de capture (thème nouveau ou existant).

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'interaction et étant conçus pour commander l'exécution des différentes étapes de ce procédé.

L'invention vise donc aussi un programme comprenant des instructions de code de programme pour l'exécution des étapes du procédé d'interaction lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un dispositif d'interaction avec au moins un document multimédia sur un thème donné par un utilisateur à partir d'au moins un ensemble de contenus, comportant un processeur mettant en oeuvre une action sur ledit ensemble de contenus suite à une commande d'un utilisateur, ladite action déclenchant une copie d'au moins une partie d'au moins un desdits contenus, ladite partie dudit au moins un desdits contenus traitant d'un thème donné, ladite copie étant agrégée à un document multimédia sur le thème donné.

Avantageusement, un terminal utilisateur comporte le dispositif d'interaction.

Un objet de l'invention est un procédé de gestion d'un document multimédia sur un thème donné par un utilisateur à partir d'au moins un ensemble de contenus. Le procédé de gestion comporte une copie d'au moins une partie d'au moins un desdits contenus, ladite copie étant agrégée à un document multimédia sur le thème donné.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'interaction de documents multimédia et étant conçus pour commander l'exécution des différentes étapes de ce procédé.

L'invention vise donc aussi un programme comprenant des instructions de code de programme pour l'exécution des étapes du procédé de génération d'un document multimédia lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un autre objet de l'invention est un dispositif de gestion d'un document multimédia sur un thème donné par un utilisateur à partir d'au moins un ensemble de contenus. Le dispositif de gestion comporte un générateur d'une copie d'au moins une partie d'au moins un desdits contenus, ladite copie étant agrégée audit document multimédia sur un thème donné par un utilisateur.

Un objet de l'invention est également un dispositif de fourniture d'accès à des contenus comportant un gestionnaire de documents multimédia sur un thème donné par un utilisateur à partir d'un ensemble de contenus dont l'accès est fourni par ledit dispositif de fourniture d'accès, ledit gestionnaire de document multimédia est apte à effectuer une copie d'au moins une partie d'au moins un desdits contenus, ladite copie étant agrégée audit document multimédia sur un thème donné par un utilisateur.

Ainsi, le fournisseur d'accès à des contenus propose à ces utilisateurs de gérer des documents multimédia collectionnant les contenus dont ils fournissent l'accès en fonction d'un thème donné par un utilisateur. Ces documents multimédia peuvent être accessible soit en lecture et en écriture uniquement par l'utilisateur ayant donné le thème du document, soit en lecture seule par une entité sociale comportant au moins l'utilisateur ayant donné le thème du document et en écriture seulement par l'utilisateur ayant donné le thème du document, soit en lecture et en écriture par l'ensemble des utilisateurs d'une entité sociale comportant l'utilisateur ayant donné le thème du document.

Avantageusement, le dispositif de fourniture d'accès comporte un enregistreur de documents multimédia sur un thème donné par un utilisateur, ledit enregistreur écrivant, dans un espace de stockage en association avec une entité sociale comportant au moins ledit utilisateur, ledit document multimédia fourni par un agrégateur ayant agrégé ladite copie audit document multimédia sur ledit thème donné par ledit utilisateur.

Ainsi, le document multimédia est conservé par le fournisseur d'accès à des contenus permettant la même gestion des droits d'auteurs sur les contenus agrégés dans ce document multimédia que pour un simple accès aux contenus.

Les caractéristiques et avantages de l'invention apparaîtront plus clairement à la lecture de la description, faite à titre d'exemple, et des figures s'y rapportant qui représentent :
- Figure 1, un schéma simplifié du procédé de gestion selon l'invention,
- Figure 2, un schéma non exhaustif d'un procédé d'utilisation de contenu et d'un procédé de fourniture d'accès à des contenus selon l'invention,
- Figure 3, un schéma simplifié d'une architecture de fourniture d'accès à des contenus comportant un dispositif d'interaction et un dispositif de gestion selon l'invention,
- Figure 4, un exemple d'implémentation du dispositif d'interaction et du dispositif de fourniture d'accès selon l'invention pour un kiosque de presse numérique,
- Figures 5a et 5b, une illustration simplifiée d'une interface de fourniture d'accès à des contenus lors de la mise en oeuvre du procédé selon l'invention, respectivement un accès à des documents multimédia relatifs à plusieurs thèmes, et un document multimédia relatif à un thème donné.

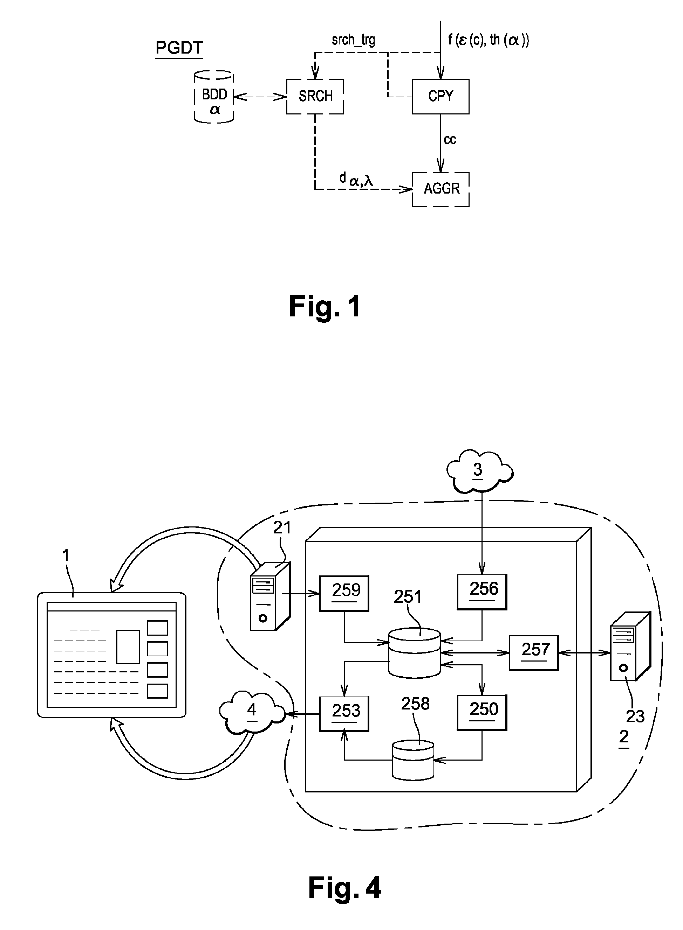

La figure 1 illustre un schéma simplifié du procédé de gestion selon l'invention.

En parallèle du procédé d'interaction PIT, coté utilisateur, peut être mis en oeuvre un procédé de gestion PGDT d'au moins un document multimédia sur un thème donné par un utilisateur à partir d'au moins un ensemble de contenus.

Le procédé de gestion d'un document multimédia PGDT sur un thème donné par un utilisateur à partir d'au moins un ensemble de contenus, comporte une copie CPY d'au moins une partie d'au moins un desdits contenus ε(c). La partie dudit au moins un desdits contenus ε(c) traite d'un thème donné th_{α}. La copie cc est agrégée à un document multimédia sur le thème donné d_{α,λ}, notamment par le procédé de gestion, ou par un procédé de fourniture d'accès à des contenus, etc.

En particulier, le procédé de gestion PGDT comporte une agrégation AGGR de ladite copie cc audit document multimédia sur le thème donné d_{α,λ}.

En particulier, le procédé de gestion PGDT comporte une recherche SRCH du document multimédia sur le thème donné d_{α,λ} en fonction d'un thème th_{α} associé à une partie d'un contenu ε(c).

Cette recherche SRCH est déclenchée *srch*_*trg* soit par la copie CPY d'une partie du contenu ε(c), soit par une commande fv(ε(c), th_{α}) déclenchant en parallèle la copie CPY de la partie du contenu ε(c).

La recherche est notamment effectuée dans une base de données de documents multimédia thématisés BDD_D ou directement dans un sous-ensemble d'une base de données de contenus, ce sous-ensemble comportant uniquement des documents multimédia thématisés. En particulier, la recherche est effectuée uniquement sur les documents multimédias associés à un utilisateur Uλ ou à une entité social (non illustrée) à laquelle appartient ledit utilisateur Uλ à l'origine de la commande de copie fv(ε(c), th_{α}).

Le document multimédia d_{α,λ} obtenu par l'agrégation AGGR sera éventuellement stocké dans la base de données de documents multimédia BDD_D ou dans un sous-ensemble d'une base de données de contenus, ce sous-ensemble comportant uniquement des documents multimédia thématisés.

Par une partie d'un contenu est entendu un sous-ensemble non vide dudit contenu qui comporte éventuellement la totalité dudit contenu. Par exemple, dans le cas d'un contenu constitué par un article de presse, la partie dudit contenu peut être soit l'article complet, soit uniquement le texte complet dudit article, soit uniquement toutes les photos illustrant ledit article, soit un ou plusieurs paragraphes dudit articles comportant ou non les photos illustrant lesdits paragraphes, soit une ou plusieurs des photos illustrant ledit article.

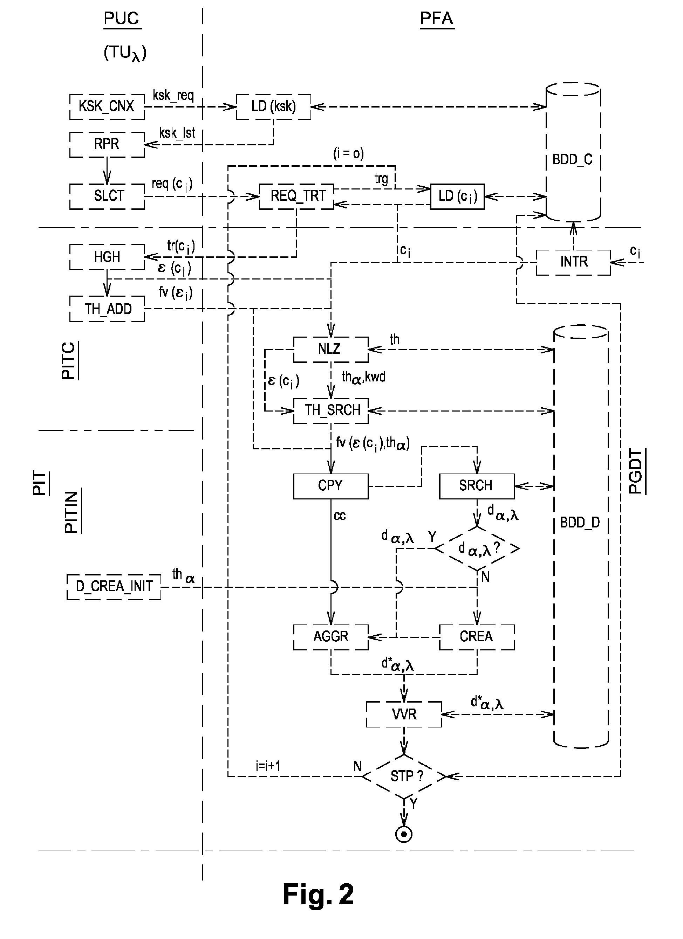

La figure 2 illustre un schéma non exhaustif d'un procédé d'interaction et d'un procédé de fourniture d'accès à des contenus selon l'invention.

Le procédé de gestion d'un document multimédia PGDT illustré par la figure 2 reprend celui illustré par la figure 1 en ce qu'il comporte une copie CPY d'au moins une partie d'au moins un desdits contenus ε(cᵢ).

En particulier, le procédé de gestion PGDT comporte une agrégation AGGR de ladite copie cc audit document multimédia sur le thème donné d_{α,λ}.

En particulier, le procédé de gestion PGDT comporte une recherche SRCH du document multimédia sur le thème donné d_{α,λ} en fonction d'un thème th_{α} associé à une partie d'un contenu ε(cᵢ).

Ainsi, lors d'une demande d'un utilisateur Uλ d'ajout d'une partie d'un contenu à un document multimédia relatif à un thème donné fv(ε(cᵢ), th_{α}), le procédé de gestion PGDT copie CPY la partie du contenu ε(cᵢ), recherche SRCH un document multimédia relatif au thème donné th_{α} et associé à l'utilisateur demandeur Uλ, et agrège AGGR la copie cc audit document multimédia d_{α,λ}. Notamment, le procédé de gestion PGDT stocke WR le document multimédia agrégé d_{α,λ}, en écrasant éventuellement la version précédente dudit document multimédia sur le même thème, dans la base de données de documents multimédia BDD_D par exemple

En particulier, le procédé de gestion PGDT comporte une recherche TH_SRCH, en fonction d'un thème donné th_{α} par un utilisateur Uλ, de parties de contenus {ε(cᵢ)} parmi au moins un ensemble de contenus BDD_C. La recherche TH_SRCH déclenche la copie CPY des parties de contenus résultantes de ladite recherche {ε(cᵢ)}.

En particulier, le procédé de gestion comporte un déclenchement, par une création CREA d'un document multimédia sur un thème th_{α} donné par un utilisateur Uλ, de ladite recherche TH_SRCH en fonction dudit thème donné par ledit utilisateur.

Ainsi, lors d'une demande d'un utilisateur Uλ de création d'un document multimédia relatif à un thème donné th_{α}, le procédé de gestion PGDT crée un document multimédia CREA ce qui déclenche la recherche du thème donné TH_SRCH dans des contenus, notamment dans l'ensemble des contenus accessibles par l'utilisateur U_{λ}, voire dans la totalité des contenus d'une ou plusieurs bases de données de contenus BDD_C... La recherche TH_SRCH est déclenchée directement ou indirectement après chargement d'au moins un contenu LD(ci), et éventuellement analyse NLZ dudit contenu cᵢ pour fournir soit des mots clés kwd, soit des thèmes th facilitant la recherche des contenus abordant le thème donné TH_SRCH . La recherche TH_SRCH commande fv(ε(Cᵢ), th_{α}), pour chaque contenu cᵢ abordant le thème donné th_{α}, une copie CPY de la partie du contenu ε(cᵢ). Puis, le procédé de gestion agrège AGGR la copie cc audit document multimédia d_{α,λ} créé. Notamment, le procédé de gestion PGDT stocke WR le document multimédia agrégé d_{α,λ}, en écrasant éventuellement la version précédente dudit document multimédia sur le même thème, dans la base de données de documents multimédia BDD_D par exemple. En particulier, le stockage WR est effectué soit après chaque agrégation AGGR d'une partie d'un contenu supplémentaire ε(cᵢ) (comme illustré par la figure 2), soit après l'agrégation AGGR de toutes les parties de contenu relatives au thème donné (non illustré). Le procédé de gestion est éventuellement itéré i=i+1 sur chacun des contenus jusqu'à épuisement des contenus STP ? = Y .

En particulier, le procédé de gestion comporte un déclenchement, par un ajout INTR d'au moins un contenu cᵢ dans ledit au moins un ensemble de contenus BDD_C, de ladite recherche TH_SRCH, parmi les contenus ajoutés, en fonction des thèmes associés th_{α}, th_{β}, ... à des documents multimédia d_{α,λ}, d_{β,λ}...

Ainsi, lors de l'ajout INTR de nouveau contenu cᵢ notamment par un fournisseur d'accès, ou par un utilisateur (dans le cas de service de partage de contenus par exemple)..., le procédé de gestion PGDT déclenche la recherche de thème TH_SRCH dans au moins les contenus ajoutés. La recherche TH_SRCH est déclenchée directement ou indirectement après chargement d'au moins un contenu ajouté LD(ci), et éventuellement analyse NLZ dudit contenu ajouté cᵢ pour fournir soit des mots clés kwd, soit des thèmes th facilitant la recherche d'un thème abordé par au moins une partie d'un contenu TH_SRCH parmi les thèmes associés à des documents multimédia associé à chaque utilisateur Uλ. La recherche TH_SRCH commande fv(ε(Cᵢ), th_{α}), pour chaque contenu cᵢ abordant un thème th_{α}, une copie CPY de la partie du contenu ε(cᵢ) et, éventuellement une recherche SRCH du document multimédia relatif au thème abordé th_{α}. Puis, le procédé de gestion agrège AGGR la copie cc audit document multimédia d_{α,λ}. Notamment, le procédé de gestion PGDT stocke WR le document multimédia agrégé d_{α,λ}, en écrasant éventuellement la version précédente dudit document multimédia sur le même thème, dans la base de données de documents multimédia BDD_D par exemple.

En particulier, le procédé de gestion PGDT comporte un déclenchement d'une copie CPY d'une partie d'un contenu ε(cᵢ) par une sélection HGH de ladite partie dudit contenu ε(cᵢ) au moyen d'une interface par un premier utilisateur U_{λ} d'une entité sociale (une entité sociale étant notamment un groupe de plusieurs utilisateurs ayant un lien social entre eux, tel qu'un groupe d'amis, un groupe familial, un groupe professionnel, etc.). La copie cc est agrégée dans un document multimédia d_{α,µ} sur un thème donné th_{α} par un deuxième utilisateur U_{µ} de ladite entité sociale. Le premier utilisateur U_{λ} peut être distinct ou non du deuxième utilisateur U_{µ} ayant créé le document multimédia relatif au thème donné th_{α}.

Ainsi, le document multimédia relatif à un thème donné peut être partagé aussi en écriture au sein d'une entité sociale : Par exemple, un groupe de collègues travaillant sur un projet commun, peut utiliser le document multimédia relatif à un thème pour établir une bibliographie partagée sur le thème du projet commun.

En particulier, l'entité sociale est constituée par un seul utilisateur Uλ.

En particulier, le procédé de gestion PGDT comporte une analyse NLZ de ladite partie sélectionnée dudit contenu ε(cᵢ) en fonction des thèmes th de documents multimédia associés audit utilisateur Uλ. La copie de ladite partie sélectionnée est agrégée aux documents multimédia sur les thèmes analysés dans ladite partie sélectionnée.

En particulier, le procédé de gestion comporte un déclenchement de la recherche SRCH par une indication au moyen de ladite interface par ledit premier utilisateur d'au moins un thème th_{α} associé à ladite partie sélectionnée ε(cᵢ).

Soit la recherche SRCH permet de déterminer un document multimédia existant sur le thème donné d_{α,λ} ? = Y : La copie cc de ladite partie sélectionnée ε(cᵢ) est alors agrégé AGGR au document multimédia d_{α,λ} associé audit premier utilisateur sur le thème indiqué par ledit premier utilisateur et trouvé par la recherche SRCH .

Soit la recherche SRCH permet de déterminer qu'il n'existe pas de document multimédia sur le thème donné d_{α,λ} ? = N : le procédé de gestion PGDT comporte alors la création CREA de ce document multimédia d_{α,λ}, puis la copie cc de ladite partie sélectionnée ε(cᵢ) est agrégé AGGR au document multimédia d_{α,λ} associé audit premier utilisateur sur le thème indiqué par ledit premier utilisateur ainsi créé.

Un mode de réalisation du procédé de gestion selon l'invention est un programme comprenant des instructions de code de programme pour l'exécution des étapes du procédé de gestion d'un document multimédia lorsque ledit programme est exécuté par un processeur.

En parallèle du procédé de gestion PGDT peut être mis en oeuvre, coté utilisateur, un procédé d'interaction PIT avec au moins un document multimédia sur un thème donné par un utilisateur à partir d'au moins un ensemble de contenus. Le procédé d'interaction PIT comporte une action D_CREA_INIT, HGH sur ledit ensemble de contenus suite à une commande d'un utilisateur. L'action D_CREA_INIT, HGH déclenche la copie CPY d'au moins une partie d'au moins un desdits contenus ε(cᵢ). La partie dudit au moins un desdits contenus ε(cᵢ) traite d'un thème donné th_{α}. La copie cc est agrégée AGGR à un document multimédia sur le thème donné d_{α,λ}.

En particulier, le procédé d'interaction PIT comporte une sélection HGH d'au moins une partie d'un contenu ε(cᵢ) au moyen d'une interface par un premier utilisateur U_{λ} d'une entité sociale. La sélection HGH déclenche ladite copie CPY de ladite partie sélectionnée dudit contenu.

En particulier, le procédé d'interaction PIT comporte une indication TH_ADD au moyen de ladite interface par ledit premier utilisateur Uλ d'au moins un thème th_{α} associé à ladite partie sélectionnée ε(cᵢ). La copie de ladite partie sélectionnée cc est agrégé AGGR à un document multimédia associé audit premier utilisateur sur le thème indiqué par ledit premier utilisateur d_{α,λ}.

En particulier, l'action sur l'ensemble de contenus D_CREA_INIT, HGH mise en oeuvre par le procédé d'interaction PIT déclenche une agrégation AGGR de la copie au document multimédia sur le thème donné.

En particulier, l'action sur l'ensemble de contenus D_CREA_INIT, HGH mise en oeuvre par le procédé d'interaction PIT déclenche, par exemple au moyen d'une commande fv(ε(c), th_{α}), une recherche SRCH du document multimédia sur le thème donné d_{α,λ} en fonction d'un thème th_{α} associé à une partie d'un contenu ε(c), notamment en parallèle la copie CPY de la partie du contenu ε(c).

En particulier, l'action sur l'ensemble de contenus est constituée par une initialisation d'un nouveau thème D_CREA_INIT qui transmet un nouveau thème th_{α} au procédé de gestion PGDT. L'initialisation D_CREA_INIT déclenche l'étape de création CREA du procédé de gestion PGDT qui crée un nouveau document multimédia sur le nouveau thème th_{α}.

En particulier, le procédé d'interaction comporte une requête d'ajout de nouveau contenu cᵢ par un utilisateur (dans le cas de service de partage de contenus par exemple)..., Cette requête d'ajout déclenche l'ajout INTR par le procédé de gestion et, donc, la recherche de thème TH_SRCH dans au moins les contenus ajoutés.

En particulier, le procédé d'interaction PIT comporte une action sur une partie d'un contenu suite à une commande de sélection HGH de ladite partie dudit contenu ε(cᵢ) au moyen d'une interface par un premier utilisateur U_{λ} d'une entité sociale (une entité sociale étant notamment un groupe de plusieurs utilisateurs ayant un lien social entre eux, tel qu'un groupe d'amis, un groupe familial, un groupe professionnel, etc.). La copie cc est agrégée dans un document multimédia d_{α,µ} sur un thème donné th_{α} par un deuxième utilisateur U_{µ} de ladite entité sociale. Le premier utilisateur U_{λ} peut être distinct ou non du deuxième utilisateur U_{µ} ayant créé le document multimédia relatif au thème donné th_{α}.

En particulier, l'action sur l'ensemble de contenus déclenche une analyse NLZ de ladite partie sélectionnée dudit contenu ε(cᵢ) en fonction des thèmes th de documents multimédia associés audit utilisateur Uλ. La copie de ladite partie sélectionnée est agrégée aux documents multimédia sur les thèmes analysés dans ladite partie sélectionnée.

En particulier, l'action sur l'ensemble de contenus déclenche un déclenchement de la recherche SRCH par une indication au moyen de ladite interface par ledit premier utilisateur d'au moins un thème th_{α} associé à ladite partie sélectionnée ε(cᵢ).

Un mode de réalisation du procédé d'interaction est un programme comprenant des instructions de code de programme pour l'exécution des étapes du procédé d'interaction lorsque ledit programme est exécuté par un processeur.

La figure 2 illustre un schéma simplifié d'un procédé d'utilisation de contenus PUC et d'un procédé de fourniture d'accès à des contenus PFA, selon l'invention.

Eventuellement, comme le montre la figure 2, le procédé d'utilisation de contenus PUC et le procédé de fourniture d'accès à des contenus PFA échangent. Par exemple, le procédé d'utilisation PUC comporte une connexion à un kiosque de contenus KSK_CNX. Cette connexion KSK_CNX envoie une requête de connexion *ksk req* au kiosque de contenus.

En particulier, le procédé de fourniture d'accès à des contenus PFA gère l'accès aux contenus du kiosque. Dans ce cas, le procédé de fourniture d'accès aux contenus d'un kiosque PFA reçoit la requête de connexion au kiosque de contenus *ksk_req.* En réponse à cette requête de connexion *ksk_req,* le procédé de fourniture d'accès PFA charge LD(ksk), notamment, le catalogue de contenus du kiosque pour fournir ce catalogue *ksk_Ist,* par exemple au procédé d'utilisation PUC qui le reproduit RPR.

Le catalogue du kiosque *ksk_Ist* comporte notamment une liste d'identifiants des contenus de la base de données de contenus BDDC du kiosque et/ou une liste de lien d'accès à ces contenus de la base de données de contenus BDDC du kiosque. Le catalogue du kiosque ksk_Ist peut comporter l'ensemble des contenus de la base de données BDDC ou seulement une partie des contenus de la base de données BDDC (par exemple, les contenus auxquels un utilisateur a souscrit, les contenus correspondant au profil d'un utilisateur, notamment en cas de contrôle parental à l'âge de l'utilisateur, ou de manière plus général au intérêt de l'utilisateur).

Le procédé d'utilisation PUC comporte, éventuellement, une sélection SLCT d'un contenu du catalogue *cᵢ*, notamment suite à une action d'un utilisateur sur un terminal mettant en oeuvre le procédé d'utilisation PUC. Cette sélection SLCT requiert le contenu *req(cᵢ),* notamment au procédé de fourniture d'accès PFA. Alors, le procédé de fourniture d'accès PFA charge le premier contenu LD(cᵢ) à partir de la base de données de contenu BDDC et le transmet REQ_TRT, notamment au procédé d'utilisation PUC.

Le procédé d'utilisation PUC comporte, éventuellement, le procédé d'interaction PIT.

En particulier, le procédé d'utilisation comporte un procédé d'interaction avec des documents multimédia thématisé en fonction d'un contenu PITC. Le procédé d'interaction PITC en fonction d'un contenu comporte une action sur un ensemble de contenus consistant en une sélection HGH d'au moins une partie ε(cᵢ) du contenu reçu cᵢ du procédé de fourniture d'accès PFA. La sélection est, en particulier, effectuée au moyen d'une interface par un premier utilisateur U_{λ} d'une entité sociale. La sélection HGH déclenche ladite copie CPY de ladite partie sélectionnée dudit contenu. En outre, le procédé d'interaction en fonction d'un contenu PIT peut, notamment, comporter une indication TH_ADD au moyen de ladite interface par ledit premier utilisateur Uλ d'au moins un thème th_{α} associé à ladite partie sélectionnée ε(cᵢ).

Ainsi, lorsqu'un utilisateur Uλ lit un contenu cᵢ, le procédé d'interaction en fonction d'un contenu PITC peut comporter le déclenchement de l'étape de copie CPY du procédé de gestion PGDT par la lecture (non illustrée) de ce contenu cᵢ.

Une alternative consiste, lorsqu'un utilisateur Uλ lit un contenu cᵢ, en ce que le procédé d'interaction en fonction d'un contenu PITC comporte une sélection HGH par l'utilisateur Uλ d'une partie ε(cᵢ) du contenu lu cᵢ. Cette sélection HGH peut, elle-aussi, déclencher fv(ε(cᵢ)) l'étape de copie CPY du procédé de gestion PGDT.

Une autre alternative consiste, lorsqu'un utilisateur Uλ lit un contenu cᵢ, en ce que le procédé d'interaction en fonction d'un contenu PITC comporte une sélection HGH par l'utilisateur Uλ d'une partie ε(cᵢ) du contenu lu cᵢ, puis une indication TH_ADD d'au moins un thème th_{α}. Cette indication TH_ADD d'un thème pour une partie du contenu lu cᵢ peut, elle-aussi, déclencher l'étape de copie CPY du procédé de gestion PGDT, et en outre la recherche SRCH et/ou la création CREA d'un document multimédia relatif au thème indiqué th_{α}.

Le procédé d'interaction en fonction d'un contenu PITC peut prévoir une ou plusieurs de ces alternatives qui seront mises en oeuvre alternativement en fonction de l'action ou de la série d'action de l'utilisateur relativement au contenu et/ou de paramètres de profil de l'utilisateur (notamment un paramètre d'utilisation systématique de tous les contenus lus, un paramètre d'utilisation systématique de tous les parties sélectionnées, un paramètre de demande systématique du thème d'affectation, etc.).

Ainsi, lorsque le paramètre d'utilisation systématique de tous les contenus lus est actif, le procédé d'interaction en fonction d'un contenu PITC comporte une détection (non illustré) de lecture qui déclenche le procédé de gestion PGDT, notamment une analyse NLZ du contenu lu fournissant, pour au moins une partie ε(cᵢ) du contenu lu, un ou plusieurs mots clés et/ou un plusieurs thème et, si nécessaire, une recherche de thème TH_SRCH, fournissant pour au moins une partieε(cᵢ) du contenu lu, un thème associé à un document multimédia existant. Le procédé de gestion PGDT comporte alors la copie CPY déclenchée par au moins une commande *fv(E(ci)), thα)* résultant de l'analyse NLZ et, le cas échéant, de la recherche TH_SRCH. Suite à la copie CPY d'au moins une partie ε(cᵢ) du contenu lu, le procédé de gestion PGDT comporte l'agrégation AGGR de la partie ε(cᵢ) dans un document multimédia relatif à un thème abordé d_{α,λ} par ladite partie ε(cᵢ). Le document multimédia relatif à un thème abordé d_{α,λ} étant notamment retrouvé par la recherche de document SRCH, ou créé CREA lorsqu'aucun document multimédia n'existe sur ce thème. Ainsi, la sélection HGH par le procédé d'interaction déclenche l'agrégation AGGR de la copie de la partie ε(cᵢ) du contenu.

Notamment, l'étape de création CREA du procédé de gestion PGDT comporte des échanges avec le procédé d'interaction PIT afin de demander à l'utilisateur l'autorisation de créer un nouveau document multimédia relatif à un thème abordé par le contenu lu (non illustré). La création CREA sera effectivement mise en oeuvre après réception par le procédé de gestion PGDT d'une étape d'acceptation de l'utilisateur lors du procédé d'interaction PIT.

Lorsque le paramètre d'utilisation systématique de tous les parties sélectionnées est actif, le procédé d'interaction en fonction d'un contenu PITC comporte une sélection HGH qui déclenche le procédé de gestion PGDT, notamment une analyse NLZ du contenu lu fournissant, pour la partie sélectionnée ε(cᵢ) du contenu lu, un ou plusieurs mots clés et/ou un plusieurs thème et, si nécessaire, une recherche de thème TH_SRCH, fournissant pour la partie sélectionnée partie ε(cᵢ) du contenu lu, un thème associé à un document multimédia existant. Le procédé de gestion PGDT comporte alors la copie CPY déclenchée par au moins une commande *fv(E(ci)), thα)* résultant de l'analyse NLZ et, le cas échéant, de la recherche TH_SRCH. Suite à la copie CPY de la partie sélectionnée ε(cᵢ) du contenu lu, le procédé de gestion PGDT comporte l'agrégation AGGR de la partie ε(cᵢ) dans un document multimédia relatif à un thème abordé d_{α,λ} par ladite partie ε(cᵢ). Le document multimédia relatif à un thème abordé d_{α,λ} étant notamment retrouvé par la recherche de document SRCH, ou créé CREA lorsqu'aucun document multimédia n'existe sur ce thème.

Notamment, l'étape de création CREA du procédé de gestion PGDT comporte des échanges avec le procédé d'interaction PIT afin de demander à l'utilisateur l'autorisation de créer un nouveau document multimédia relatif à un thème abordé par le contenu lu (non illustré). La création CREA sera effectivement mise en oeuvre après réception par le procédé de gestion PGDT d'une étape d'acceptation de l'utilisateur lors du procédé d'interaction PIT.

Lorsque le paramètre de demande systématique du thème d'affectation est actif, le procédé de gestion PGDT ayant été déclenché sur lecture d'un contenu cᵢ, sur sélection HGH d'une partie ε(cᵢ) d'un contenu lu, comporte une interrogation sur le thème d'affectation (non illustré) qui envoie une demande de thème *req(th)* au procédé d'interaction PIT, le procédé d'interaction comporte alors une étape de capture (non illustrée) : capture de saisie clavier, capture d'interaction tactile, capture audio et/ou vidéo, etc. permettant à l'utilisateur d'indiquer un thème d'affectation. L'étape de capture renvoi le thème indiqué tr(thα) au procédé de gestion qui analyse NLZ le contenu lu cᵢ, voire la partie sélectionnée ε(cᵢ) en fonction du thème indiqué thα, puis recherche SRCH le document multimédia du thème indiqué thα, ou le créé CREA lorsqu'aucun document multimédia n'existe sur ce thème pour y agrégé AGGR une copie cc d'au moins une partie ε(cᵢ) du contenu lu.

Notamment, le procédé de gestion PGDT stocke WR le document multimédia agrégé d_{α,λ}, en écrasant éventuellement la version précédente dudit document multimédia sur le même thème, dans la base de données de documents multimédia BDD_D par exemple.

En particulier, le procédé d'utilisation comporte un procédé d'interaction avec de nouveaux documents multimédia thématisés PITN. Le procédé d'interaction avec de nouveaux documents multimédia PITN comporte une action constituée par une initialisation d'un nouveau thème D_CREA_INIT qui transmet un nouveau thème th_{α} au procédé de gestion PGDT. L'initialisation D_CREA_INIT déclenche l'étape de création CREA du procédé de gestion PGDT qui crée un nouveau document multimédia sur le nouveau thème th_{α}. En outre, l'initialisation D_CREA_INTI déclenche un chargement LD(cᵢ) de tous les contenus (soit de la base de données BDD_C du fournisseur d'accès, soit accessible par l'utilisateur UI ayant initialisé le nouveau thème) notamment de manière itérative déclenchant leur analyse NLZ, la copie d'au moins une partie d'au moins un de ces contenus, puis leur agrégation dans le document multimédia créé par le procédé de gestion PGDT.

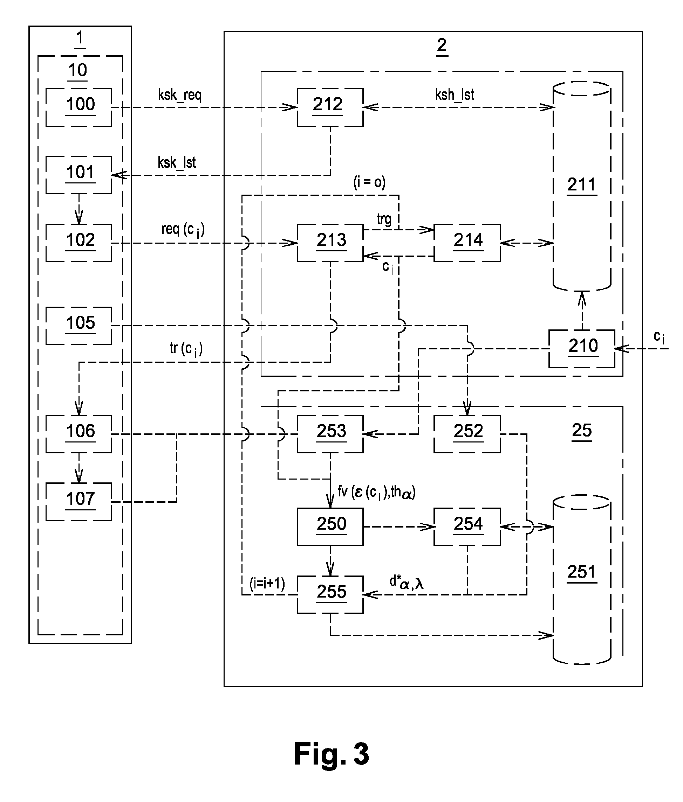

La figure 3 illustre un schéma simplifié d'une architecture de fourniture d'accès à des contenus comportant un dispositif de gestion selon l'invention.

Un dispositif de gestion 25 d'un document multimédia sur un thème donné th_{α} par un utilisateur Uλ à partir d'au moins un ensemble de contenus, comporte un générateur 250 d'une copie d'au moins une partie ε(cᵢ) d'au moins un desdits contenus. La partie ε(cᵢ) dudit au moins un desdits contenus traite d'un thème donné th_{α}. La copie cc est agrégée à un document multimédia sur le thème donné d_{α,λ}.

En particulier, le dispositif de gestion 25 comporte un agrégateur 255 de ladite copie cc audit document multimédia sur un thème donné d_{α,λ}.

En particulier, le dispositif de gestion 25 comporte un moteur de recherche (non illustré), en fonction d'un thème donné th_{α} par un utilisateur, de parties ε(cᵢ) de contenus parmi au moins un ensemble de contenus. Le moteur de recherche déclenche ledit générateur 250 de copie des parties de contenus résultantes de ladite recherche.

En particulier, le dispositif de gestion 25 comporte un analyseur 253 de partie sélectionnée par un utilisateur dans un contenu. L'analyseur 253 effectue une analyse en fonction des thèmes de documents multimédia associés audit utilisateur. La copie de ladite partie sélectionnée est agrégée aux documents multimédia sur les thèmes analysés dans ladite partie sélectionnée.

Dans un mode de réalisation illustré sur la figure 3, un dispositif de fourniture d'accès à des contenus 2 comporte le dispositif de gestion 25, aussi nommé gestionnaire de documents multimédia sur un thème donné par un utilisateur à partir d'un ensemble de contenus dont l'accès est fourni par ledit dispositif de fourniture d'accès. Le gestionnaire 25 de document multimédia est apte à effectuer une copie d'au moins une partie d'au moins un desdits contenus. La partie dudit au moins un desdits contenus traite d'un thème donné. La copie est agrégée à un document multimédia sur le thème donné.

En particulier, le dispositif de fourniture d'accès 2 comporte un enregistreur (non illustré) de documents multimédia sur un thème donné par un utilisateur. L'enregistreur écrit, dans un espace de stockage en association avec une entité sociale comportant au moins ledit utilisateur, ledit document multimédia fourni par un agrégateur ayant agrégé ladite copie audit document multimédia sur ledit thème donné.

Dans un mode de réalisation particulier, un dispositif d'interaction 10 avec au moins un document multimédia sur un thème donné par un utilisateur à partir d'au moins un ensemble de contenus, comporte un processeur 105, 106, 107 mettant en oeuvre une action sur ledit ensemble de contenus suite à une commande d'un utilisateur. L'action déclenche une copie d'au moins une partie d'au moins un desdits contenus. La partie dudit au moins un desdits contenus traite d'un thème donné. La copie est agrégée à un document multimédia sur le thème donné.

Dans un mode de réalisation particulier illustré par la figure 3, un terminal utilisateur 1 comporte le dispositif d'interaction 10.

En particulier, le dispositif d'interaction 10 est un terminal de communication 1 apte à se connecter à un dispositif de fourniture d'accès à des contenus 2 via un réseau de télécommunication.

En particulier, le dispositif de fourniture 2 est un kiosque de presse numérique.

En particulier, le dispositif d'utilisation 10 comporte un connecteur 100 requérant *ksk_req* un accès à un kiosque 21.

Un dispositif de fourniture 2 comporte notamment un kiosque 21 et un dispositif de gestion 25.

Notamment, le dispositif de fourniture d'accès 2 ou un kiosque 21 du dispositif de fourniture d'accès 2 comporte un module d'accès 212 fournissant le catalogue du kiosque *ksk_lst* sur réception d'une requête d'accès *ksk_req,* éventuellement après vérification de l'autorisation d'accès de l'utilisateur du terminal 1 comportant le dispositif d'utilisation 10. Par exemple, le dispositif de fourniture d'accès 2 ou le kiosque 21 comporte une base de données 211 comportant le catalogue de contenu *ksk_Ist.*

En particulier, le dispositif d'utilisation 10 comporte un reproducteur, notamment un afficheur, 101 reproduisant le catalogue reçu *ksk_Ist* du kiosque 21, et un sélectionneur 102, permettant à l'utilisateur du dispositif d'utilisation 10 de sélectionné un contenu ci dans le catalogue reproduit. Le sélectionneur 102 envoie une requête du contenu *req(ci).*

En particulier, le dispositif de fourniture d'accès 2 ou le kiosque 21 comporte un chargeur 214 permettant de charger, à partir d'une base de données de contenu 211 du kiosque 21, un contenu ci suite à une réception par un processeur de requête 213 d'une requête du contenu *req(ci).* Le processeur de requête 213 transmet *tr(ci)* le contenu ci chargé.

Eventuellement, le dispositif de fourniture d'accès 2 ou le kiosque 21 comporte une interface d'entrée de contenu 210 permettant de charger un nouveau contenu dans la ou l'une des bases de données de contenus 211 du dispositif de fourniture d'accès 2 ou du kiosque 21. Ainsi, le dispositif de fourniture d'accès 2 ou le kiosque 21 peut régulièrement être mis à jour par l'administrateur du kiosque et/ou un ou plusieurs éditeurs de contenus.

En particulier, l'interface d'entrée de contenu 210 transmet les nouveaux contenus *ci à* un analyseur 253 sémantique du dispositif de fourniture d'accès 2 ou du dispositif de gestion 25. Alternativement (non illustré), l'analyseur sémantique 253 surveille l'ensemble des bases de données 211 du dispositif de fourniture d'accès afin d'y détecter l'ajout d'un nouveau contenu *ci* et d'analyser ce nouveau contenu *cᵢ*.

L'analyseur sémantique 253 détermine pour chaque nouveau contenu *cᵢ* un ou plusieurs parties ε(cᵢ), et les mots clés kwd et/ou thèmes associés th, et commande le générateur de copie 250 sur au moins une partie ε(cᵢ) pour un thème déterminé soit par l'analyseur 253 soit sur la base des résultats fournis par l'analyseur 253 à un moteur de recherche de thème (non illustré).

Le générateur de copie 250 commande, éventuellement, un moteur de recherche 254 pour retrouver un document multimédia sur le thème associé th_{α} à la partie ε(cᵢ) copiée, et un agrégateur 255 pour agréger la copie cc au document multimédia relatif au thème associé dα,λ. Le moteur de recherche 254 peut commander un générateur de document multimédia 252 pour créer un nouveau document multimédia lorsque le moteur de recherche 254 ne trouve pas de document relatif au thème associé.

Le dispositif d'interaction comporte, notamment, un générateur de nouveau thème 105 qui permet à un utilisateur U_{λ} d'indiquer un nouveau thème th_{α}. Le générateur de nouveau thème 105 commande le générateur de nouveau document 252 du gestionnaire 25 en lui transmettant notamment le nouveau thème thα Le générateur de nouveau thème 105 créé un nouveau document multimédia relatif au nouveau thème dα,λ. En parallèle, soit le générateur de nouveau thème 105, soit le générateur de nouveau document 252 commande l'analyseur 253 pour procéder à l'analyse des contenus du kiosque 211 en fonction de ce nouveau thème th_{α}.

En particulier, l'analyseur 253 commande le chargeur 214 pour récupérer les contenus avant de les analyser puis de commander le générateur de copie 250. Ainsi, l'agrégateur 255 reçoit des copies de parties sélectionnées de contenus du générateur de copie 250 qu'il agrège avec le nouveau document multimédia créé fourni dα,λ par le générateur de nouveau document 252. Soit l'agrégateur 255, soit un enregistreur (non illustré) stocke le nouveau document multimédia d_{α,λ} ainsi obtenu par l'agrégateur 255 notamment dans une base de données de documents multimédia relatif à un thème 251.

Le dispositif d'interaction comporte, notamment, un sélectionneur de partie de contenu 106 qui permet à un utilisateur U_{λ} de sélectionner une partie d'un contenu ci envoyé par le processeur de requête 213. Le sélectionneur 105 commande soit un classificateur 107 qui permet à l'utilisateur U_{λ} d'indiquer le thème th_{α} associé à la partie sélectionnée ε(cᵢ), soit directement l'analyseur 253 qui permet de déterminer automatiquement, seul ou en combinaison avec un moteur de recherche de thème (non illustré), le ou les thèmes th_{α} abordés par la partie sélectionnée ε(cᵢ).

En particulier, l'analyseur 253 commande le générateur de copie 250. Ainsi, l'agrégateur 255 reçoit, du générateur de copie 250, une copie de la partie ε(cᵢ) du contenu sélectionnée par l'utilisateur U_{λ}, qu'il agrège avec un document multimédia relatif au thème th_{α} abordé par la partie sélectionnée ε(cᵢ). Ce thème th_{α} a été fourni soit par l'utilisateur U_{λ} au gestionnaire 250, soit déterminé par l'analyseur 253 seul ou en combinaison avec un moteur de recherche de thème. Un moteur de recherche de document 254 commandé notamment par le générateur de copie 250 fourni le document multimédia relatif au thème th_{α} associé à la partie sélectionnée ε(cᵢ).

L'agrégateur 255 ou un enregistreur (non illustré) stocke le document multimédia d_{α,λ} ainsi obtenu par l'agrégateur 255 notamment dans une base de données de documents multimédia relatif à un thème 251.

La figure 4 illustre un exemple d'implémentation du dispositif de fourniture d'accès selon l'invention pour un kiosque de presse numérique.

Le terminal 1 est, par exemple, une tablette tactile permettant notamment la reproduction d'articles de presse numérique aussi nommée e-press comme le montre la figure 3. Par exemple, le terminal 1 comporte une application e-press constituant un dispositif d'utilisation 10 selon l'invention (voir figure 3).

Le dispositif 21 est notamment un kiosque de presse numérique. Et, le dispositif 25 est par exemple un dispositif d'enrichissement d'un kiosque de presse numérique. Le dispositif de de gestion 25 comporte notamment un collecteur de données d'enrichissement 256 cherchant des données contenus multimédias externe au kiosque 21 des contenus en lien avec le thème abordé par un contenu cᵢ du kiosque 21 affiché sur le terminal 1. En particulier, le collecteur 256 récupère les définitions des thèmes de l'article ci (ou contenu) reproduit, des articles encyclopédiques concernant les personnes, pays... faisant l'objet de l'article ci. Le calculateur 257 calcule notamment la similarité des données d'enrichissement fournit par le collecteur 256 afin de sélectionner les plus pertinentes.

Le dispositif de gestion 25 selon l'invention est non seulement un dispositif d'enrichissement mais aussi un dispositif de gestion de documents multimédia relatif à un thème car il comporte un collecteur de deuxième contenu 253 permettant de déterminer des contenus du kiosque 21 traitant d'un thème abordé par le contenu ci. Le calculateur de similarité 257 calcule aussi la similarité des contenus fournit par le collecteur 253 avec le contenu ci afin de sélectionner les plus pertinent.

Ainsi, l'agrégateur 253 fournit une agrégation des copies fournie par la générateur de copie 250 des résultats du calculateur 257 au terminal 1 via un réseau de communication 4, tel que un réseau de communication mobile ou un réseau fixe va par exemple une connexion sans fil, par exemple Wifi. Les résultat sont notamment une liste des copies des contenus abordant un thème donné, permettant à l'utilisateur du terminal d'analyser la manière dont un même thème est abordé par différent contenu, voire d'obtenir un information plus complète sur ce thème en ayant dans un seul document, notamment tous les articles traitant la même information dans le même journal et/ou magazine, et/ou dans des journaux et/ou magazines différents, du même éditeur et/ou d'éditeur différents, auxquels il a déjà souscrit ou non.

Ainsi, l'utilisateur aura une vue globale du traitement d'une information par l'ensemble de la presse et pourra la comparer sans sortir de l'application 10 ni effectuer de recherche sur le site de chacun des médias (par exemple site Internet d'un journal), sans risque de perdre l'information dans le temps. En effet, même si l'article est modifié ou retiré du kiosque, l'invention lui permet de conserver l'accès aux contenus pour lesquels il a manifesté un intérêt en le glissant soit de manière automatisé dans un liste de lecture (readlist) sur un thème qui l'intéresse, soit de manière volontaire dans un liste de lecture sur un thème qu'il a indiqué ou généré automatiquement.

Le dispositif de gestion 25 comporte notamment un ou plusieurs bases de données 251, 258 permettant notamment de stocker respectivement les métadonnées (mots-clés, thèmes), les documents multimédia relatif à un thème et/ou données d'enrichissement...

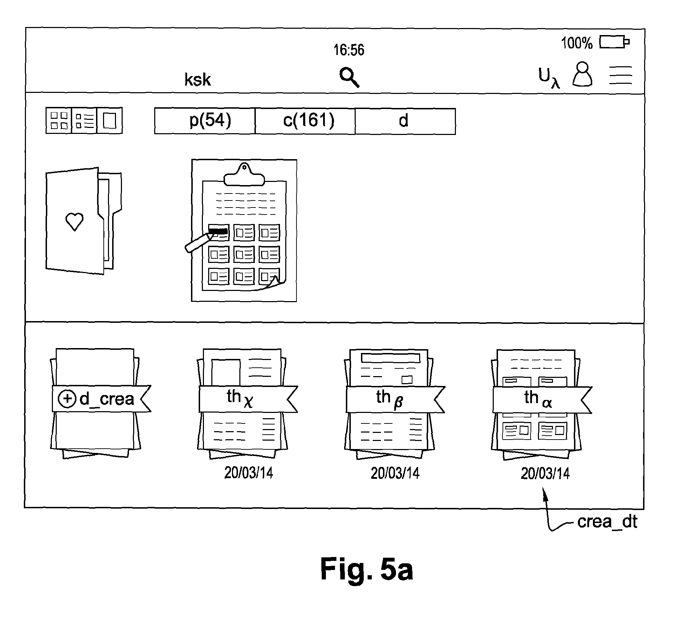

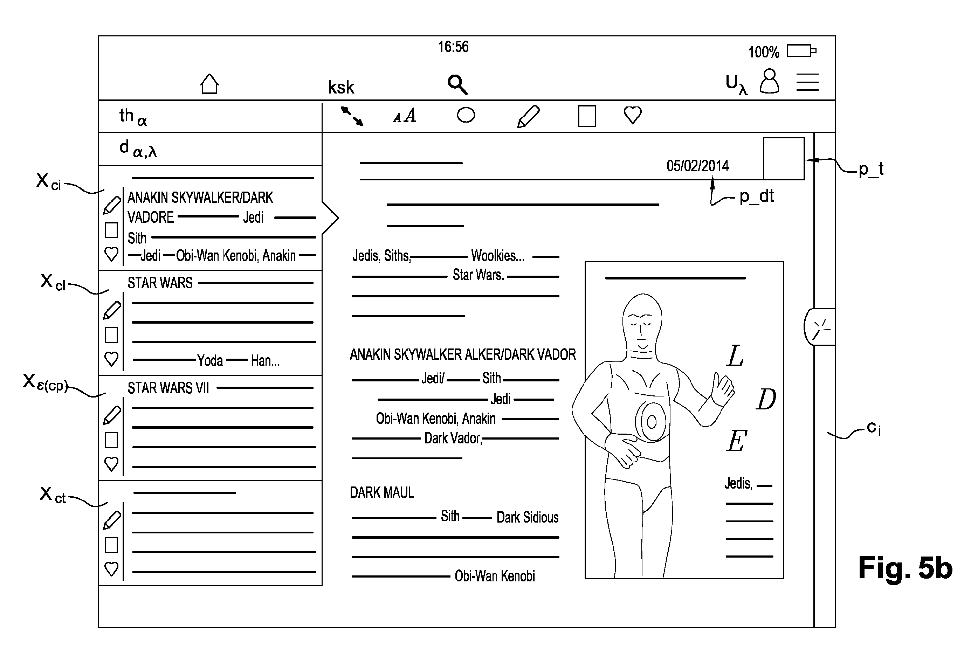

Les figures 5a et 5b montrent un exemple d'illustration simplifiée d'une interface de fourniture d'accès à des contenus lors de la mise en oeuvre du procédé selon l'invention, respectivement un accès à des documents multimédia relatifs à plusieurs thèmes, et un document multimédia relatif à un thème donné. Les figures 5a et 5b montrent pour un utilisateur U_{λ}, l'affichage de l'écran de son terminal 1.

La figure 5a montrent l'ensemble des documents multimédia d relatif à un thème associé à cet utilisateur U_{λ}, respectivement pour les thèmes thα, thβ, thχ. Dans notre exemple, le thème th_{α} est relatif au film « Star Wars ». En particulier, la figure 5a indique la date de création du document multimédia relatif à un thème. La figure 5a propose à l'utilisateur U_{λ} d'accéder soit à ses contenus c, soit à ses titres de presse p (à savoir journaux, magazines, etc.), soit de créer un nouveau thème d_crea. Il pourra être envisagé d'autres types de reproduction de la liste des documents multimédia relatifs à un thème d'un utilisateur, notamment sous forme graphique : de mosaïque, de polyèdre (notamment d'un cube) présentant un document multimédia par face... mais aussi sous forme auditive, etc.

La figure 5b montrent un document multimédia relatif au thème « Star Wars » : dα,λ. La colonne de gauche propose un extrait de l'ensemble des contenus ou parties de contenus (Xcᵢ, Xcₗ, Xε(cₚ), Xcₜ) copiés dans le document multimédia relatif à un thème th_{α};et la partie droite, le contenu copié cᵢ.

En particulier, l'extrait comporte le titre du contenu copié ou de la partie copiée, et/ou les premières lignes ou un résumé du contenu copié ou de la partie copiée, et/ou le nom du titre de presse p_t, et/ou la date de parution p_dt, et éventuellement une image réduite provenant du contenu copié ou de la partie copiée.

Là encore, Il pourra être envisagé d'autres types de reproduction d'un document multimédia relatif à un thème d'un utilisateur, notamment sous forme graphique : de mosaïque, de polyèdre (notamment d'un cube) présentant un contenu copié ou partie copiée par face... mais aussi sous forme auditive, etc.

L'invention vise aussi un support. Le support d'informations peut être n'importe quelle entité ou dispositif capable de stocker au moins un des programmes selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'interaction avec au moins un document multimédia sur un thème donné par un utilisateur à partir d'au moins un ensemble de contenus, comportant une action sur ledit ensemble de contenus suite à une commande d'un utilisateur, ladite action déclenchant une copie d'au moins une partie d'au moins un desdits contenus, ladite partie dudit au moins un desdits contenus traitant d'un thème donné, ladite copie étant agrégée à un document multimédia sur le thème donné.

2. Procédé d'interaction selon la revendication précédente, **caractérisé en ce que** l'action sur l'ensemble de contenus déclenche une agrégation de ladite copie audit document multimédia sur le thème donné.

3. Procédé d'interaction selon l'une quelconque des revendications précédentes, **caractérisé en ce que** l'action sur l'ensemble de contenus déclenche une recherche, en fonction d'un thème donné par un utilisateur, de parties de contenus parmi au moins un ensemble de contenus, ladite recherche déclenchant la copie des parties de contenus résultantes de ladite recherche.

4. Procédé d'interaction selon la revendication précédente, **caractérisé en ce que** ledit procédé d'interaction comporte une initialisation 'un nouveau thème déclenchant la création d'un document multimédia sur un thème donné suite à une commande de l'utilisateur, la création du document déclenchant ladite recherche en fonction dudit thème donné par ledit utilisateur.

5. Procédé d'interaction selon la revendication 3, **caractérisé en ce que** ledit procédé d'interaction comporte une requête d'ajout d'au moins un contenu dans ledit au moins un ensemble de contenus, la requête d'ajout déclenchant ladite recherche, parmi les contenus ajoutés, en fonction des thèmes associés à des documents multimédia.

6. Procédé d'interaction selon l'une quelconque des revendications précédentes, **caractérisé en ce que** ledit procédé de gestion comporte une action sur une partie d'un contenu suite à une commande de sélection de ladite partie dudit contenu au moyen d'une interface par un premier utilisateur d'une entité sociale, l'action sur une partie déclenchant ladite copie de ladite partie sélectionnée dudit contenu, ladite copie étant agrégée dans un document multimédia sur un thème donné par un deuxième utilisateur d'une entité sociale.

7. Procédé d'interaction selon la revendication précédente, **caractérisé en ce que** l'action sur l'ensemble de contenus déclenche une analyse de ladite partie sélectionnée dudit contenu en fonction des thèmes de documents multimédia associés audit utilisateur, ladite copie de ladite partie sélectionnée étant agrégée aux documents multimédia sur les thèmes analysés dans ladite partie sélectionnée.

8. Procédé d'interaction selon l'une quelconque des revendications 6 ou 7, **caractérisé en ce que** ledit procédé de gestion comporte un déclenchement d'une recherche par une indication au moyen de ladite interface par ledit premier utilisateur d'au moins un thème associé à ladite partie sélectionnée, la copie de ladite partie sélectionnée étant agrégé à un document multimédia associé audit premier utilisateur sur le thème indiqué par ledit premier utilisateur.

9. Programme comprenant des instructions de code de programme pour l'exécution des étapes du procédé d'interaction selon la revendication précédente lorsque ledit programme est exécuté par un processeur.

10. Dispositif d'interaction avec au moins un document multimédia sur un thème donné par un utilisateur à partir d'au moins un ensemble de contenus, comportant un processeur mettant en oeuvre une action sur ledit ensemble de contenus suite à une commande d'un utilisateur, ladite action déclenchant une copie d'au moins une partie d'au moins un desdits contenus, ladite partie dudit au moins un desdits contenus traitant d'un thème donné, ladite copie étant agrégée à un document multimédia sur le thème donné.

11. Terminal utilisateur comportant un dispositif d'interaction selon la revendication 10.

12. Procédé de gestion d'un document multimédia sur un thème donné par un utilisateur à partir d'au moins un ensemble de contenus, comportant une copie d'au moins une partie d'au moins un desdits contenus, ladite partie dudit au moins un desdits contenus traitant d'un thème donné, ladite copie étant agrégée à un document multimédia sur le thème donné.

13. Programme comprenant des instructions de code de programme pour l'exécution des étapes du procédé de gestion d'un document multimédia selon l'une quelconque des revendications précédentes lorsque ledit programme est exécuté par un processeur.

14. Dispositif de gestion d'un document multimédia sur un thème donné par un utilisateur à partir d'au moins un ensemble de contenus, comportant un générateur d'une copie d'au moins une partie d'au moins un desdits contenus, ladite partie dudit au moins un desdits contenus traitant d'un thème donné, ladite copie étant agrégée à un document multimédia sur le thème donné.

15. Dispositif de fourniture d'accès à des contenus comportant un gestionnaire de documents multimédia sur un thème donné par un utilisateur à partir d'un ensemble de contenus dont l'accès est fourni par ledit dispositif de fourniture d'accès, ledit gestionnaire de document multimédia est apte à effectuer une copie d'au moins une partie d'au moins un desdits contenus, ladite partie dudit au moins un desdits contenus traitant d'un thème donné, ladite copie étant agrégée à un document multimédia sur le thème donné.
